# EUROPEAN PATENT SPECIFICATION

(11) **EP 0 682 486 B1**
(45) Date of publication and mention of the grant of the patent: **16.06.1999**
(21) Application number: 94906109.7
(22) Date of filing: 04.02.1994
(51) Int. Cl.: A47F 9/04, B62B 3/10

(54) **SHOPPING CART CHECK-OUT MONITORING SYSTEM**
ÜBERWACHUNGS-EINRICHTUNG ZUR KONTROLLE VON EINKAUFSWAGEN
SYSTEME DE SURVEILLANCE DE CADDIE DE SUPERMARCHE A UNE CAISSE DE SORTIE

(30) Priority: 05.02.1993 CA 2088894; 28.01.1994 US 184131
(43) Date of publication of application: 22.11.1995
(73) Proprietor: S.T.O.P. INTERNATIONAL (BRIGHTON) INC., Peterborough, Ontario K9J 2V9 (CA)
(72) Inventor: ALLEN, James F., Peterborough, Ontario K9J 2V9 (CA); ROSEBUSH, Paul, North York, Ontario M2J 4K3 (CA)
(74) Representative: Svoboda, Harald
(86) International application number: CA9400063
(87) International publication number: WO9417700

(56) References cited:
- DE-A- 2 936 834
- DE-A- 3 217 944
- US-A- 3 457 423

## Description

### BACKGROUND OF THE INVENTION

This invention relates to an object detection system and device, and in particular, to a system and device for detecting the presence of objects in a storage area of a shopping cart.

Shopping carts used in supermarkets generally have storage areas for storing goods which are to be purchased or which have been purchased and are being transported to the exit or parking lot. Shopping carts generally have an upper storage area and a lower storage area located under the upper storage area. The lower storage area is typically used to hold large or heavy items and generally comprises a tray of some kind for easy placement and removal of large and/or heavy items.

One difficulty with shopping carts in general is that as a consumer takes the shopping cart through the checkout aisle, either through inadvertence or intentionally, not all of the goods in the storage areas, particularly the lower storage area, of the shopping cart are brought to the cashier's attention. Accordingly, this leads to some goods not being paid for and the supermarket or grocery store suffering a loss.

In the past, several devices or systems have been used to attempt to detect the presence of objects in the storage areas of shopping carts. In order to accomplish this, some prior art devices have utilized the fact that the weight of objects located in the storage sections, and in particular the lower storage section, deflects the tray which forms the lower storage section. These prior art devices utilized devices, such as reflectors, attached to the lower section tray such that a deflection of the lower tray caused by the weight of the object located thereon would move the reflector and be noticed by a sensor located at the checkout counter.

Other prior art devices have detected objects on shopping carts by scanning the storage sections of the shopping carts. However, certain of these prior art devices also required that a triggering device, such a reflector, be applied to each and every shopping cart belonging to a grocery store or supermarket. The reflector in these prior art devices served essentially two functions. Firstly, the reflector permitted these prior art devices to distinguish between shopping carts and other items, such as baby strollers and people, passing in front of the prior art devices. This prevented the prior device from scanning objects other than shopping carts and thereby creating false readings if objects other than goods were detected. Secondly, the reflector permitted the prior art devices to initiate scanning of the shopping cart at the proper time, namely when the shopping cart was properly oriented in front of the scanning device. Furthermore, in some prior art devices, the reflector even helped determine the duration of the scan.

It is apparent that if a monitoring system requires reflectors, or other devices to be placed on each and every shopping cart belonging to a grocery store in order for the monitoring systems to operate, there would be substantial labour and material cost involved in implementing and installing these prior art devices in a grocery store. Furthermore, any changes made to the shopping carts would be readily apparent to consumers. Accordingly, if it is the intention of a consumer to leave the supermarket or grocery store without paying for certain goods, the consumer could attempt to defeat the detection system once the consumer is alerted to its presence.

Another type of prior art detector is exemplified by US-A-3,457,423, Gravely, showing across the aisle light beams actuating photo sensors to detect the presence of individuals and carts, including upper basket scanners and lover basket scanners. The Gravely system requires interruption of the light beam, by carts having an opaque band; it is subject to giving false alarms.

In the case of DE-A-32 17944, Haugk, this prior art system relies upon an across-the-aisle beam with an associated reflector fixed on the opposite side of the aisle, to provide a retroflective scan system. This system monitors continuously, the scan depending upon the interruption of the cross-aisle beam for its operation, which can readily lead to false alarms.

### SUMMARY OF THE INVENTION

Accordingly, it is an object of this invention to at least partially overcome the disadvantages of the prior art. Also, it is an object of this invention to provide an alternative type of object detection device which can distinguish between a shopping cart (and similar devices) and other items or articles. It is also an object of this invention to provide an object detection system which can distinguish shopping carts from other items, such as baby strollers and people, without the need to place any type of device, such as a reflector, on the shopping carts of the grocery store or otherwise alter the shopping carts of a supermarket or grocery store.

Accordingly, in one of its broad aspects, this invention resides in providing an object detection device for detecting objects on a storage section of a moving shopping cart comprising triggering means operable to detect at least two parts of the shopping cart when the shopping cart moves into a predetermined position and to send a trigger signal when the at least two parts of the shopping cart are sensed substantially simultaneously, a detecting means for detecting an object on the storage section of the shopping cart when the shopping cart moves into the predetermined position and operable to receive the trigger signal and wherein the detecting means operates in response to the trigger signal and generates a detection signal if an object is detected.

Another aspect of the invention resides in providing an object detection system for detecting objects on a storage section of a moving shopping cart comprising a triggering means comprising a first triggering detector operable to detect a first part of the shopping cart entering a first area and a second triggering detector operable to detect a second part of the shopping cart entering a second area spatially separated from the first area, a detecting means for detecting an object on the storage section of the shopping cart, wherein when the triggering means detects that the dirst part of the shopping cart is entering the first area at substantially the same time as the second part of the shopping cart is entering the second area the triggering means causes the detecting means to operate and wherein the detecting means generates a detection signal if the detecting means detects an object.

The present invention thus provides a system for installation beside a check-out aisle of limited width along which shopping carts exit, the system having a plurality of photo detectors scanning substantially horizontally in a cross-aisle direction for detecting the presence of an object located upon the lower shelf of the shopping cart, characterized in that selected first ones of said photo detectors are located to register upon two functional portions of said cart; said two portions being uniquely capable of actuating said first photo detectors, to detect the presence of a shopping cart in the aisle adjacent the detectors, and at least one other second said photo detector being located to detect the presence of an object upon a selected portion of the shopping cart, said first and second photo detectors being diffuse scan detectors; said first photo detectors being sited to detect predetermined functional portions of said cart when located in registry with said first photo detectors; said at least one second photo detector being located between a pair of said first detectors arranged in mutually spaced relation beside said aisle.

The aforesaid system further includes signalling means connected with said at least one second detector and energized thereby upon actuation of said at least one second detector, to signal detection of said object in said selected portion of said cart.

The aforesaid functional cart portions comprise a cart front wheel and a cart rear wheel.

The aforesaid first photo detectors may be focussed with a focal length less than the width of the aisle along which the carts exit. However, the aforesaid detector focal length may be less than one half of the width of the aisle.

In the main embodiment the aforesaid first photo detectors when actuated substantially simultaneously produce an output causing energization of the aforesaid at least one second photo detector. Also, the selected cart portion comprises a lower storage section.

In the aforesaid main embodiment the system may include an indicator device selected from an audio indicator and a visual indicator.

The system may include a video camera as part of the signalling means.

The main embodiment of the subject system provides the aforesaid first photo detectors and the at least one second photo detector wherein each has an adjustable focal length restricted to less than the width of the aisle.

The focal lengths of the adjustable photo detectors for detecting the presence of the cart may be limited to less than about one half of the width of the aisle.

The system may have logic means comprising flip flops that are energized by one of the aforesaid first photo detectors, whereby upon passage of a portion of a cart past the one first photo detector the logic means provides energization of the at least one second photo detector.

In the system the aforesaid logic means may be connected with a plurality of the first photo detectors, to provide the energization of the at least one second photo detector on being energized by the presence of a cart.

The system's at least one second photo detector may be an infra-red detector.

The system's main embodiment has logic means connected with a plurality of the aforesaid first photo detectors, to energize the at least one second photo detector upon energization of the plurality of first photo detectors by the presence of a cart. This at least one second photo detector is preferably an infra-red detector.

The subject logic means preferably includes a sequence determining circuit having invertors in combination with flip flops, to initiate further detection activity for the presence of an object upon the cart lower shelf only upon the detection of the presence of the cart on normal approach.

In the main embodiment opto-isolators are connected with the at least one second detector for energization thereby, to prevent further transaction until the opto-isolators are switched off.

The aforesaid first photo detectors include a photo detector to register upon a third functional portion of the cart, with subsequent actuation of the other of the first photo detectors.

The aforesaid logic means of the system main embodiment permits a predetermined slight delay between the responses of the aforesaid first photo detectors.

It will be understood that a simpler embodiment of the present solid state invention may be used incorporating a simplified detection system, while relying upon alternative output-enabling means such as a magnetic sensitive of other discriminatory means to enable the detector output.

Further aspects of the invention will become apparent upon reading the following detailed description and the drawings which illustrate the invention and preferred embodiments of the invention.

### BRIEF DESCRIPTION OF THE DRAWINGS

In the drawings, which illustrate embodiments of the invention:
Figures 1A, 1B and 1C show side views of a shopping cart and a schematic representation of one embodiment of the present invention;
Figure 2 is a side view of a shopping cart illustrating a preferred embodiment of the present invention;
Figure 3 is a top view of a further embodiment of the present invention;
Figure 4 is a front view of one embodiment of the present invention;
Figure 5 is a circuit diagram of one embodiment of the present invention;
Figures 6A, 6B and 6C comprise the elements of a circuit diagram of a second, solid state embodiment of the present invention; and
Figure 7 is a circuit diagram of a power supply suited for the Figure 5 and Figures 6A, 6B and 6C embodiments.

### DETAILED DESCRIPTION OF PREFERRED EMBODIMENTS OF THE INVENTION

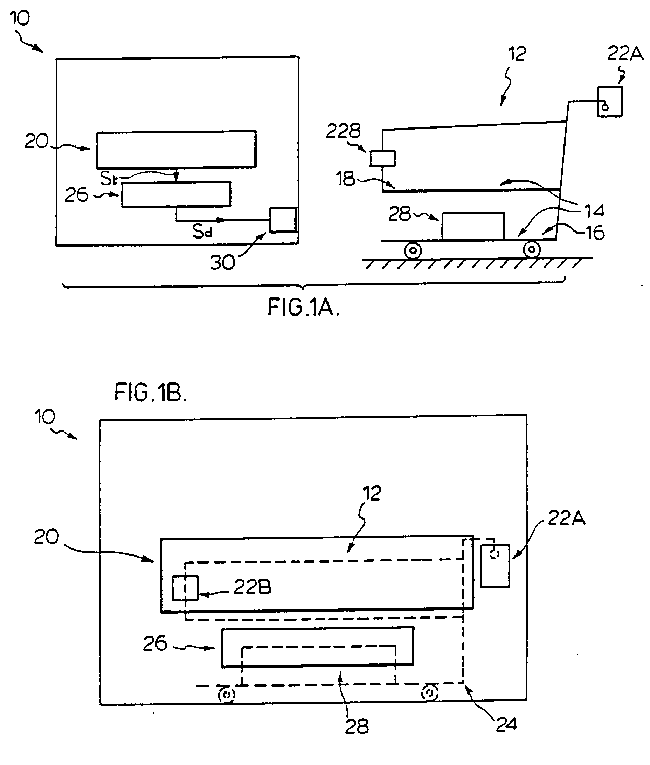

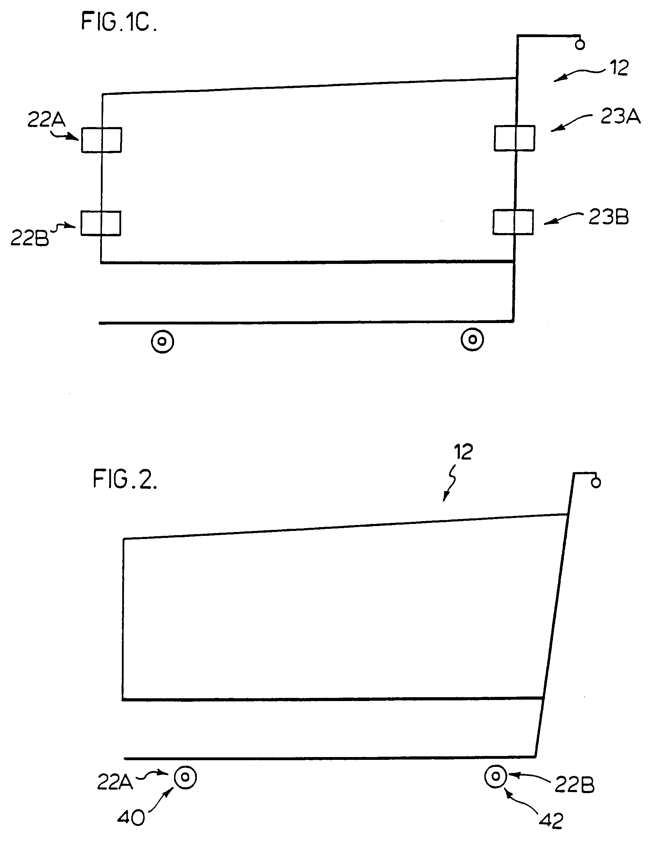

The embodiments shown in Figures 1 and 2 partly fall within the scope of protection of subsisting Claim 1 since they do not show the arrangement of first and second photo detectors as defined in the independent claim.

As shown in Figure 1A, the present invention, in one embodiment, comprises the device 10. The device 10 has a triggering means 20 which is operable to send a trigger signal Sₜ. The device 10 further comprises a detecting means 26 for detecting an object 28 on a storage section 14 of a shopping cart 12. (It is understood that the term shopping cart 12 in this context refers specifically to a shopping cart as used in a grocery store or supermarket but can include other vehicles or devices used to score and transport objects and goods.) The detecting means 26 is also operable to generate a detection signal S_{d} if an object is detected.

Figure 1B shows the shopping cart 12 in dotted lines at a predetermined position 24. The triggering means 20 is operable to detect at least two parts of the shopping cart (shown generally in Figure 1A and 1B as 22A and 22B) when the shopping cart 12 moves into the predetermined position 24 The triggering moans 20 sends the trigger signal Sₜ when the two parts 22A and 22B of the shopping cart 12 are sensed substantially simultaneously.

It should be noted that the at least two parts that trigger the triggering means 20 could be any two parts of the shopping cart 12. It is further understood that there could be more than two parts that trigger the triggering means 20, such as three parts, four parts or more.

The triggering means 20 is operable to sense or detect the at least two parts 22A, 22B of the shopping cart 12 in order to distinguish the shopping cart 12, from other items or articles which may pass in front of the detection device 10. Such other articles or items could be baby carriages, strollers, or people walking in front of the device 10. The possibility that these other articles or items could pass in front of the triggering means 20 such that two parts of these other articles or items would be in a position with regards to the triggering means 20 to fool the triggering means 20 are relatively low. In this way, the device 10 decreases the number of false readings caused by the device 10 being incorrectly triggered by one of these other articles or items and having the detecting means 26 detect objects other than objects 28 on a storage section 14 of a shopping cart 12. Therefore sensing at least tow parts 22A, 22B, rather than just one part of the shopping cart 12, increases the reliability of the device 10 by decreasing the chances that other objects or articles could falsely trigger the trigger means 20.

It is typical that all or most of the shopping carts 12 which belong to a particular supermarket or grocery store where the device 10 is installed are of the same general design. The detecting means 26 will not operate to detect objects 28 in storage areas 14 of shopping carts 12 which do not have at least two parts 22A and 22B located in positions which can be detected by the trigger means 20 when the shopping carts 12 are in the predetermined position. Accordingly, the specific settings and dimensions of the device 10 must be customized for the particular shopping carts 12 used by each supermarket or grocery stores in which the device 10 is installed.

In instances where two substantially similar shopping carts 12 are used by a grocery store, similarly located parts of the two different shopping carts, such as the wheels, could be used as the at least two parts 22A, 22B. Alternatively, a first triggering means could be utilized to detect the at least two parts of a first type of shopping cart 12 and a second triggering means could be utilized to detect at least two parts of the second type of shopping cart.

Alternatively, parts could be added to different sized shopping carts so as to simulate the two parts 22A and 22B of shopping cart 12.

It is also preferable that no other two parts of the shopping cart 12 could also be in a position with regard to the triggering means 20 as the at least two parts 22A, 22B when the shopping cart 12 moves across the device 10 thereby fooling the triggering means 20 into generating a false trigger signal S_{tf}. To this end, it is preferable that the at least two parts 22A, 22B of the shopping cart 12 are unique in that the sensing of those at least two parts 22A, 22B, and only those at least two parts 22A, 22B, will cause the triggering means 20 to send the trigger signal Sₜ.

Reference is made to Figure 1C which shows the two parts 22A, 22B of the shopping cart 12 as being two sections of the front support of the upper storage area 18. While the present invention can operate if the at least two parts 22A, 22B are as shown in Figure 1C, these parts 22A, 22B are not unique in that two other parts (shown generally as 23A and 23B in Figure 1C as the rear support for the upper storage area 18) will be in a similar position with regard to the triggering means 20 as the two parts 22A, 22B at some time when the shopping cart 12 moves across the device 10. Therefore, if the two parts 22A, 22B of the shopping cart 12 are as shown in Figure 1C, it is possible that the triggering means 20 will mistakenly sense the two other parts 23A and 23B and send a false trigger signal S_{tf}. If the trigger means 20 does mistake the two other parts 23A and 23B as the two parts 22A and 22B and send a false trigger signal S_{tf}, it is possible that the detection means 26 will send a false detection signal S_{df} if the detecting means 26 detects an object. Accordingly, the at least two parts 22A, 22B should be unique.

In a further embodiment, shown generally in Figure 2, the two parts 22A, 22B of the shopping cart 12 which are sensed by the triggering means 20 are a front wheel 40 and a rear wheel 42. Depending on the nature of the triggering means 20, the front wheel 40 which is sensed could be a front wheel 40 on either side of the shopping cart 12, or only a front wheel on a particular side of the shopping cart 12. Likewise, the rear wheel 22 sensed by the triggering means 20 could be a rear wheel 42 on either side of the shopping cart 12, or a rear wheel 42 on a particular side of the shopping cart 12. Preferably, the front wheel 40 and the rear wheel 42 on the side closest to the trigger means 20 are the parts 22A and 22B.

The triggering means 20 can comprise any type of sensor or detector, such as a photodetector or a tactile sensor, to effect the sensing or detection of the at least two parts 22A, 22B of the shopping cart 12. In the case of a tactile sensor, two tactile sensors could be placed across an aisle to sense the front and rear wheels 40, 42 of the shopping cart 12 as the cart 12 is moved past the tactile sensors.

It is also understood that the present invention could be adopted to detect objects on any of a number of different storage sections 14, such as the lower storage section 16 or the upper storage section 18, or both, depending on the detecting means 26 used. However, it is preferable it the detecting means 26 at least detects objects on the lower section 16 in that it is generally more difficult for cashiers to see objects 28 on the lower section 16.

In a further embodiment of the invention, the device 10 comprises a signalling means shown generally in Figure 1A as 30. The signalling means 30 is operable to receive the detection signal S_{d} and to signal to a human operator acting as a cashier that an object 26 has been detected. In a further embodiment, the signalling means 30 comprises a video camera and the signalling means 3.0 signals that an object 26 has been detected by video taping the object 28 on the storage section 14 upon receiving the detection signal S_{d}. In this way, visual evidence is obtained of the object 28 on the storage section 14.

In a further embodiment of the invention, signalling means 30 comprises an audio indicator, such as a buzzer, or a visual indicator, such as a light bulb, or both an audio and visual indicator in combination. In this embodiment, it is also preferable that the audio and visual indicator remain activated until a human operator deactivates it such as by pushing a button.

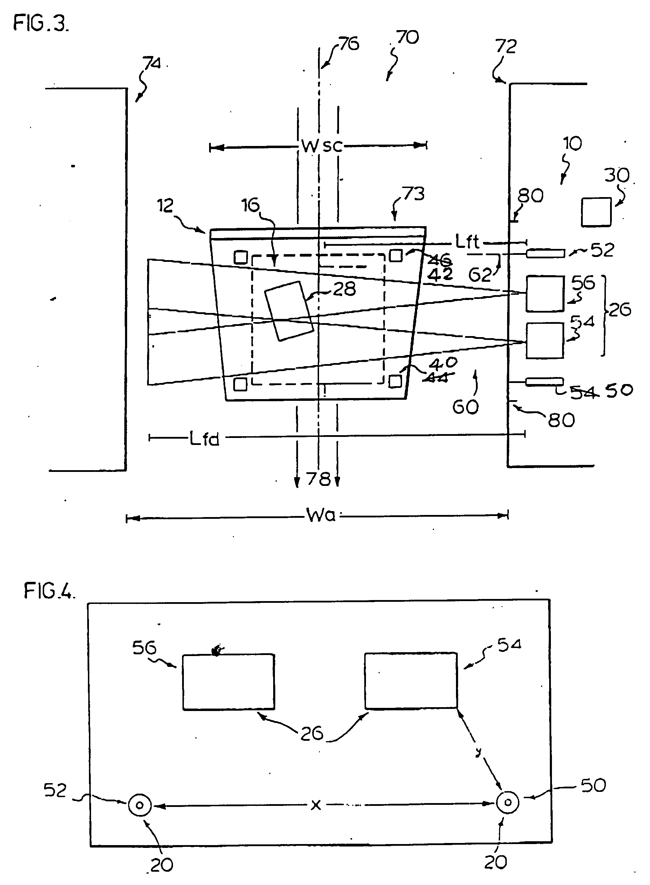

Figure 3 shows the main embodiment of the invention where two photodetectors act as the triggering means 20. As shown in Figure 3, a first triggering photodetector 50 and a second triggering photodetector 52 are configured and oriented to detect a front wheel 40 and rear wheel 42, respectively. In this embodiment, the triggering means 20 will generate the trigger signal Sₜ when the first triggering photodetector 50 and the second triggering photodetector 52 detect the front wheel 40 and the rear wheel 42 substantially simultaneously. This type of arrangement is often referred to as an AND-AND configuration. In this embodiment it is also preferable that the triggering photodetectors 50, 52 be aimed at a point about one to two centimeters above the center of the front and rear wheels 40, 42.

In the system of the present invention, the triggering means 20 can be understood generally as including an embodiment in which triggering means 20 is operable to detect a first part 22A of the shopping cart 12 entering a first area 60 and a second part 22B of the shopping cart 12 entering a second area 62 spatially separated from the first area 60 as shown in Figure 3. In this embodiment, the triggering means 20 will generate the trigger signal Sₜ, or otherwise cause the detecting means 20 to operate, when the triggering means 20 detects that the first part 22A of the shopping cart 12 is entering the first area 60; substantially at the same time (which is the same as substantially simultaneously) as the second part 22B of the shopping cart 12 is entering the second area 62.

In the embodiment shown in Figure 3, the first part 22A of the shopping cart 12 corresponds to the front wheel 40 and the second part 22B of the shopping cart corresponds to the rear wheel 42. Accordingly, the triggering means 20 will cause the detecting means 26 to detect objects 28 on the storage section 14 of the shopping cart 12 when the first triggering photodetector 50 detects the front wheel 40 entering the first area 60 and the second triggering photodetector 52 detects the rear wheel 42 entering the second area 62.

In a preferred embodiment of the invention, the detecting means 26 comprises a photodetector 54 for detecting an object 28 on the storage section 14 of the shopping cart 12 when the shopping cart 12 moves into the predetermined position 24. In this embodiment, the first detecting photodetector 54 will operate in response to the trigger signal Sₜ and the detecting means 26 will generate the detection signal S_{d} if the first detecting photodetector 54 detects an object 28.

In a further preferred embodiment, the detecting means 26 comprises two photodetectors, the first detecting photodetector 54 and a second detecting photodetector 56. In this embodiment, the detecting means 26 generates a detection signal S_{d} if an object 28 is detected by either the first detecting photodetector 54 or the second detecting photodetector 56. This type of arrangement is often referred to as an OR-OR configuration. The advantage of having two detecting photodetectors 54, 56 is that a wider area of the storage section 14 can be monitored. Also, by connecting the first detecting photodetector 54 and the second detecting photodetector 56 in an OR-OR configuration, the detecting means 26 is less likely to miss an object 28.

While any type of photodetector may be used for either of the detecting photodetectors 54, 56, or for either of the triggering photodetectors 50, 52, Honeywell FE7B series (trade mark) photodetectors have been found to be particularly useful. In particular the Honeywell FE7B-D photodetector, which is a diffuse scan photodetector, has been particularly useful. These types of photodetectors can monitor any area or volume and detect objects having a normal finish without requiring the detected object to have attached thereon a reflector of any kind.

As also shown in Figure 3, the device 10 may be connected to a first side 72 of an aisle or aisle means 70. The aisle 70 has a second side 74 separated from the first side 72 such that the width Wa of the aisle 70 is marginally wiser than the width Wsc of the shopping cart 12. In this way, the aisle means 70 can guide the shopping cart 12 along a path shown generally as 78 in Figure 3. It is apparent that the aisle means 70 could be a checkout aisle of a supermarket or grocery store with a cash register and cashier located at the first side 72 of the aisle 70.

In a further preferred embodiment of the invention, the detectors associated with the triggering means 20, which in Figure 3 are shown as the first photodetector 50 and the second photodetector 52, detect objects positioned only between the first side 72 of the aisle 70 and an area substantially halfway (shown generally as 76) between the first side 72 and the second side 74. In this way, instead of sensing either of the front wheels 40 and either of the rear wheels 42, the triggering photodetectors 50, 52 will sense only a front wheel 40 and a rear wheel 42 on a first side 73 of the shopping cart 12, which is near the first side 72 of the aisle 70 and, therefore, near the trigger means 20.

In the embodiment where the triggering means 20 comprises photodetectors, such as triggering photodetectors 50 and 52, the distal range that the photodetectors 50. 52 sense can be limited by adjusting the focal length L_{ft} of the photodetectors 50 and 52. Preferably, the focal length L_{ft} is set at about or just less than one half the width Wa of the aisle 70. In the embodiment where the triggering 20 comprises tactile sensors to sense a front wheel 40 and a rear wheel 42, the distance or area that the tactile sensors sense can be limited by not extending the sensitive part of the tactile sensor across the width Wa of the aisle 70.

The primary advantage of limiting the triggering means 20 in this way is that fewer articles or items passing through the aisle 70 will tend to trigger the triggering means 20 if its sensing area or distal range does not extend across the entire aisle 70. Accordingly, the number of false trigger signals S_{tf} which could be sent will be decreased.

As with the triggering photodetector 50, 52, the detecting photodetecotrs 54, 56 may also be adjusted so that the focal length L_{fd} of the detecting photodetectors 54, 56 is marginally less than the width Wa of the aisle 70. This is preferable for two reasons. Firstly, depending on the type of photodetector used, setting the focal length L_{fd} at or marginally less than the width of the aisle will avoid having the detecting means 26 generate a false detection signal S_{df} if the detecting means 26 detects the second side 74 of the aisle 70, rather than an object 28 on a storage section 14 of the shopping cart 12. Secondly, the detecting means 26 will be less likely to falsely detect an item or article, such as a person, standing between the shopping cart 12 and the second side 74 of the aisle 70.

In a further preferred embodiment of the invention, marking means 80 as shown in Figure 3, are utilized to mark the predetermined position 24. The marking means 80 could simply comprise pieces of sticky tape located along the first side 72 of the aisle 70. In this way, if the signalling means 30 signals that an object has been detected, a cashier or other person, can quickly look to determine if a shopping cart 12 was in the predetermined position 24 when the device 10 detected an object. If a shopping cart 12 was not in the predetermined position 24 then the cashier can quickly assess that the signalling means 30 incorrectly signalled that an object had been detected.

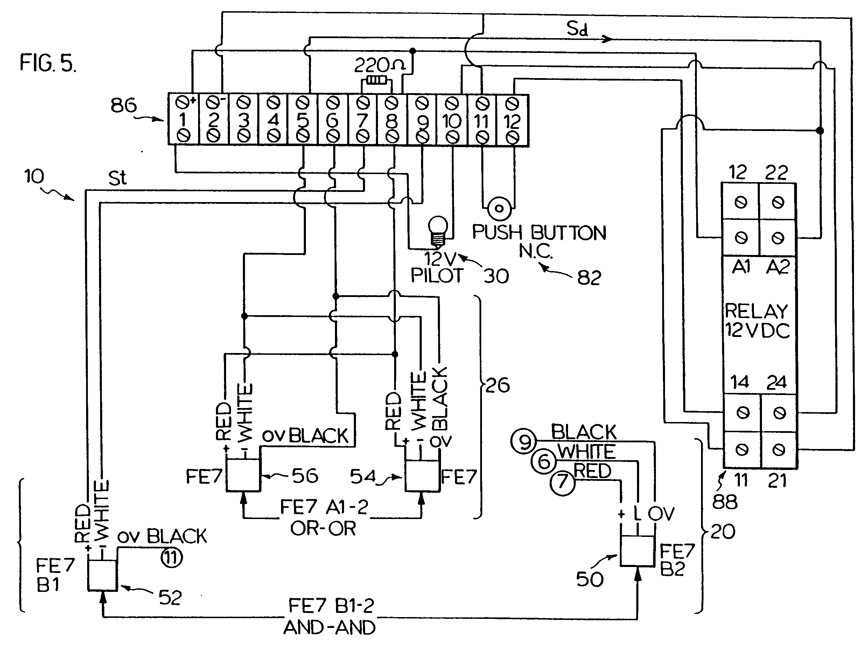

Figure 4 shows a front view of the device 10 as it could be installed in a first side 72 of an aisle 70. The embodiment shown in Figure 4 relates to the embodiment where the front and rear wheels, 40, 42 of the shopping cart 12 are to be detected. This is why the triggering photodetectors 50, 52 are shown lower than the detecting photodetectors 54, 56 of the detecting means 26. As can be seen, the two triggering photodetectors 50, 52 are shown separated by a distance x. The distance x will vary depending on the distance between wheels 40, 42 of shopping carts 12 used in a particular grocery store.

Figure 4 shows detecting photodetectors 54, 56 as being a distance y from one of the first triggering photodetectors 50. As was the case with the triggering photodetectors 50, 52, the detecting photodetectors 54, 56 are configured and oriented such that they are aligned to detect objects on a storage section 14 when the shopping cart 12 is in the predetermined position 24.

A preferred circuit diagram of a preferred embodiment of the invention is shown in Figure 5. As shown in Figure 5, the triggering means 20 comprises two Honeywell FE7 photodetectors 50, 52 which are connected in an AND-AND configuration. The detecting means, shown generally as 26, comprises two Honeywell FE7 photodetectors, 54, 56 connected in an OR-OR configuration.

The photodetectors 50, 52, 54, 56 are connected to a terminal strip 86. The numbers along the terminal strip refer to the location on the terminal strip to which each of the components is connected.

Locations 1 and 2 on the terminal strip 86 provide the power source for the device 10. The 220 ohm resistor across terminals 7 and 8 provide the required load for the operation of the photodetectors 50, 52, 54, 56. The signalling means 30 is shown generally as a 12 volt pilot light connected across locations 1 and 10 on the terminal strip 86. Also shown is a push button 82 which in this embodiment must be pressed by a human operator to deactivate the signalling means 30.

When the triggering photodetectors 50, 52 detect the two parts 22A, 22B of the shopping cart 12 substantially simultaneously, the triggering signal Sₜ is sent to the terminal strip 86 which causes the detecting means 26 to operate. If either of the detecting photodetectors 54, 56 of the detecting means 26 detect an object, the detecting means 26 sends a detecting signal S_{d} to the 12 volt relay 88. The relay 88 then causes the signalling means 30 to become activated and remain activated until the push button 82 is depressed.

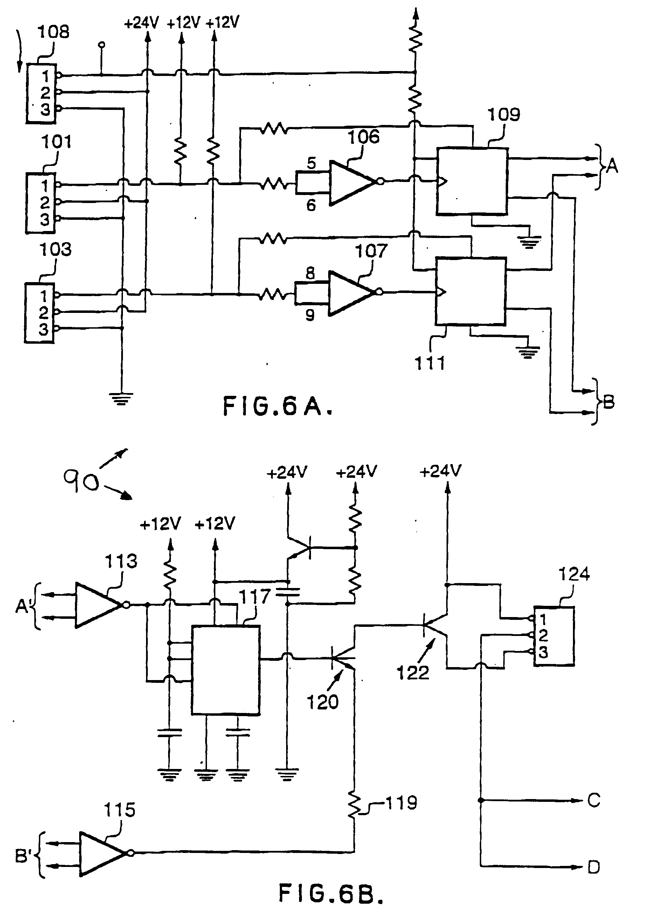

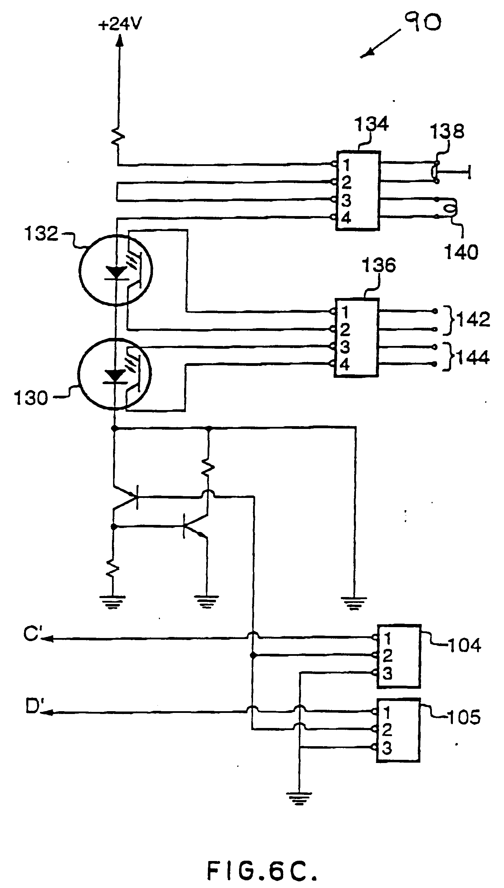

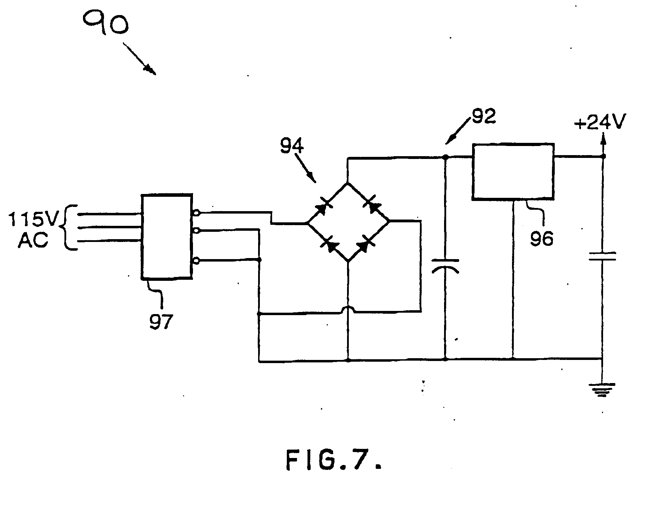

Referring to Figures 6A, 6B, 6C and 7, this solid state circuit embodiment 90 is shown having three triggering, vehicle identifying detectors 101, 103 and 108, which are located in mutually spaced relation along the aisle or other prescribed vehicle monitoring zone. The mutual spacing between the respective vehicle identifying detectors 101, 103 and 108 along the aisle or monitoring zone is particularly based upon the configuration of a predetermined vehicle or cart, referred to as vehicle/cart.

The first one, detector 108, is located in an approach location, so as to be actuated by passage therepast of a portion of the vehicle/car, or other object. The actuation of detector 108 energizes portions of the logic means, flip flops 109, 111.

Subsequent actuation of the succeeding detectors 101 and 103 substantially simultaneously or in rapid sequence, within a predetermined delay, in reading upon or identifying with predetermined physical features that are characteristic of the vehicle/cart, such as a front and rear wheel thereof, enables the presence of predetermined infra-red reflective characteristics of the vehicle/cart to be verified, whereby vehicle/cart detector output signals are accepted by the system, to energize other portions of the system.

Each vehicle detector 101, 103, 108 consists of a Honeywell FE 7B (T.M.) infra-red photodetector, each having a pulsing IR output portion located closely adjacent an IR-sensitive receiver portion of the detector.

The IR-sensitive receiver portion of each detector is energized by IR pulses emitted by the adjacent transmitter portion of that detector, which are reflected back into the receiver by an IR-reflective surface of an adjacent object. When this occurs, an output signal is generated.

A power supply 92 (Figure 7) for the circuit 90 comprises a diode bridge 94 providing a 24-volt DC output by way of voltage regulator 96. It has been found that a transformer 97 having a nominal output of 18-volts, serves well as a power source.

In addition to the illustrated three vehicle detectors 101, 103, 108 that survey the aisle or prescribed vehicle passage zone, the circuit 90 includes article detectors 104, 105 which scan the vehicle/cart when the detectors 104, 105 are energized.

The article detectors 104, 105 each comprise a Honeywell FE 7B (T.M.) IR photodetector, as described above.

An intervening circuitry comprises a logic circuit arrangement receiving inputs from the vehicle identifying detectors 101, 103, 108 in order to distinguish the presence of a vehicle or cart of predetermined side-view characteristics, e.g. a shopping cart conforming to predetermined, preselected IR-reflective characteristics that are distinguishable by the vehicle detectors 108, 101, 103, over the presence of other IR-reflective surfaces such as a person, baby carriage, etc.

The signalled presence of a vehicle conforming to a predetermined identification profile then serves, by way of the logic circuit, to energize the article detectors 104, 105, so as to scan the vehicle or cart for objects.

The interposed logic circuitry comprises a circuit arrangement having invertors 106, 107, the respective outputs of which connect with a pair of flip flops 109, 111. The flip flops 109, 111 are energized by an output from the vehicle detector 108 upon the initial detection by detector 108 of a portion of a vehicle/cart or other object, at the "upstream" location of the detector 108.

The flip flops 109, 111 introduce a predetermined delay into the logic circuit, to permit a slight delay between the outputs of the two detectors 101, and 103.

The output from flip flops 109, 111 ensure that a signal output initiated by the detectors 101, 103 is transmitted by the logic circuit only when all three of the vehicle/cart detectors 108, 101, 103 are activated, and in that sequence.

The outputs from the flip flops 109, 111 connect respectively with a pair of NAND's 113, 115.

The output of NAND 113 connects with a delay circuit 117, and thence to one side of a transistor 120; the output of NAND 115 connecting through a ballast resistor 119 with the other input of transistor 120.

A delay circuit 117 provides the logic circuit with a window some one half second within which an output from each vehicle/cart detector 101, 103 can be received.

The output of transistor 120 connects with power switch 122 that is connected through a "set-up" and "run" control box 124 and thence to the article detectors 104, 105.

In operation, with the circuit 90 energized with normal household voltage, through power supply 92, the vehicle detectors 101, 103, 108 are energized, to pulse IR light across the aisle or other prescribed vehicle passage being monitored.

The advent of an object past detector 108 generates an output, to energize the flip flops 109, 111 that form a part of the logic circuit.

The vehicle detectors 101, 103, are located so as to provide substantially simultaneous or rapidly sequential detection of preselected target parts of a prescribed vehicle/cart, conforming with the predetermined IR-reflection pattern, such as a front and a rear wheel of the vehicle/cart.

The logic circuit invertors 106, 107 being both energized, by the outputs of outputs of detectors 101, 103 provide their outputs to flip flops 109, 111.

The flip flops 109, 111 are initially energized by the output from vehicle detector 108. On the detection of the passage of a vehicle/cart vehicle detectors 101, 103 provide outputs, causing outputs from the invertors 106, 107 to the NAND's 113, 115.

The NAND 113 energizes delay 117, which energizes one side of the transistor 120. If, within the pre-set period, of delay 117 (such as one half second), the second one of the two vehicle/cart detectors signals the presence of a prescribed shopping cart, then both sides of the logic circuit become energized.

The NAND 115 being energized, thereby energizes the other input side of transistor 120. The transistor 120 then provides an output, to energize the power switch 122, thereby switching on the object detectors 104, 105.

In the event that the incoming vehicle or object is a person, shopping bag, baby carriage etc., or approaches the system from the opposite direction, to trigger a first one of the vehicle detectors 101, 103, 108, the incorrect sequence or other lack of conformity of the signals generated by the incoming object with the prescribed sequence of signal generation, or the generation of some of the sequential signals outside the prescribed delay frame of delay circuit 117 will mean that a second or third signal from a second or third detector of the group 101, 103, 108 will not be accepted by the logic circuit, and the system will not be fully activated, and thus will provide no output.

In this circumstance the NAND 115 will not be energized, the transistor 120 will not be switched on, and the object detectors 104,105 will not be energized, and will remain inactive.

Under normal operation of a shopping cart scanner according to the present invention, upon satisfactory identification by the detectors 108,101,103 of a cart conforming with the predetermined and specified cart characteristics, as validated by the logic circuit, the object detectors 104,105 are then energized, to scan the cart for objects, such as items located on the bottom tray.

The outputs from the object detector 104,105 respectively terminals 104/1 and 105/1 are both connected through opto-isolators 130,132 to junction boxes 134,136.

On the junction box 134, terminals 134/1 and 134/2 are connected with a push-button, normally-on switch 138; the terminals 134/3 and 134/4 are connected with an indicator light 140.

Actuation of the push-button switch 138 turns off and resets the system. This includes the turning off of the indicator light 140.

The junction box 136, terminals 136/1 and 136/2 indicated by 142, and 136/3 and 136/4 indicated by 144 are connected with cash registers or other accounting or detection system devices, not shown.

The opto-isolators 130,132 each comprise an LED combined with a photo-transistor.

Upon energization of either of the object detectors 104,105, by the detection of an object or objects upon the cart/vehicle, the opto-isolators 130,132 are switched on, and the junction boxes 134,136 are energized.

The terminals 142,144 of junction box 136 may be connected in controlling relation with one or more cash registers, so as to effectively close the register and prevent any further transaction until the alarm state of the system is nullified by depressing push button switch 138.

The junction box 136 may also be connected so as to bring into action a closed circuit TV camera or other surveillance device, such as a remote camera, to afford integrity checks on the system.

## Claims

1. A system for installation beside a check-out aisle (70) of limited width along which shopping carts (12) exit, the system having a plurality of photo detectors (50, 52, 54, 56, 101, 103, 108) scanning substantially horizontally in a cross-aisle direction for detecting the presence of an object (28) located upon the lower shelf of the shopping cart, characterized in that selected first ones of said photo detectors (50, 52, 101, 103, 108) are located to register upon two functional portions (40, 42) of said cart (12); said two portions (40, 42) being uniquely capable of actuating said first photo detectors (50, 52), to detect the presence of a shopping cart in the aisle adjacent the detectors, and at least one other second said photo detector (54, 56, 104, 105) being located to detect the presence of an object (28) upon a selected portion (14) of the shopping cart (12), said first and second photo detectors (50, 52, 54, 56, 101, 103, 104, 105, 108) being diffuse scan detectors; said first photo detectors (50, 52, 54, 101, 103, 108) being sited to detect predetermined functional portions of said cart (12) when located in registry with said first photo detectors (50, 52); said at least one second photo detector (54, 56) being located between a pair of said first detectors (50, 52) arranged in mutually spaced relation beside said aisle (70).

2. The system as set forth in claim 1, including signalling means (30) connected with said at least one second detector (54, 56) and energized thereby upon actuation of said at least one second detector (54, 56), to signal detection of said object (28) in said selected portion (14) of said cart (12).

3. The system as set forth in claim 1, wherein said functional portions (40, 42) of said cart (12) comprise a cart front wheel (40) and a cart rear wheel (42).

4. The system as set forth in claim 1, wherein said first photo detectors (50, 52) are focussed, having a focal length less than the width of said aisle (70).

5. The system as set forth in claim 4, wherein said first photo detectors (50, 52) have a focal length equal to less than half the width of said aisle (70).

6. The system as set forth in claim 1, wherein said first photo detectors (50, 52) when actuated substantially simultaneously, produce an output causing energization of said at least one second photo detector (54, 56).

7. The system as set forth in claim 2, wherein said selected portion (14) of said cart (12) comprises a lower storage section.

8. The system as set forth in claim 2, including a video camera (30) comprising part of said signalling means (30), said camera (30) being connected in operable controlled relation to said second detector (56), to commence operation upon the detection of the presence of said object (28).

9. The system as set forth in claim 2, wherein said signalling means (30) comprises at least one indicator device selected from an audio indicator (30) and a visual indicator (30).

10. The system as set forth in claim 1, said at least one second photo detector (54, 56, 104, 105) being energized upon substantially simultaneous triggering of two of said first photo detectors (50, 52, 101, 103, 108) arranged in mutually spaced apart relation.

11. The system as set forth in claim 10, said first photo detectors (50, 52, 101, 103, 108) and said at least one second photo detector each has an adjustable focal length, and wherein said focal lengths are all restricted to less than the width of said aisle (70).

12. The system as set forth in claim 11, wherein at least said first photo detectors (50, 52, 101, 103, 108) are limited in their focal length to less than about one half of the width of said aisle (70).

13. The system as set forth in claim 1 or claim 12, having logic means comprising flip flops (109, 111), energized by a said first photo detector (108) upon passage therepast of a portion of said cart (12), said logic means (109, 111) enabling the energization of said at least one second photo detector (54, 56, 104, 105).

14. The system as set forth in claim 13, said logic means (109, 111) being connected with a plurality of said first photo detectors (50, 52, 101, 103, 108), to provide said energization of said at least one second photo detector (56, 104, 105) upon said first detectors (50, 52, 101, 103, 108) being energized by the presence of said cart (12).

15. The system as set forth in claim 1 or claim 14, wherein said at least one second photo detector (54, 56, 104, 105) are infra-red detectors.

16. The system as set forth in claim 1 or claim 14, wherein the outputs of said first photo detectors (50, 52, 101, 103, 108) connect with a sequence determining circuit having invertors (106, 107) which in combination with flip flops (109, 111) ensure the initiation of further detection activity only upon the detection of the presence of said cart (12), upon normal approach.

17. The system as set forth in claim 2, said signalling means (30) having opto-isolators (130,132) connected to said at least one second detector (54,56,104,105) for energization thereby, to prevent further transaction until said opto-isolators (130,132) are switched off by a cashier.

18. The system as set forth in claim 1, said first ones of said photo detectors including a photo detector (108) to register upon a third functional portion of said cart with subsequent actuation of the other said selected first detectors (101,103).

19. The system as set forth in claim 13, said logic means permitting a predetermined slight delay between the responses of said first photo detectors.

## Patentansprüche

1. Ein System zur Installation neben einem Kassenausgang (70) mit begrenzter Breite für einen Einkaufswagen (12) mit einer Vielzahl von Photodetektoren (50, 52, 54, 56, 101, 103, 108), die horizontal in der Querrichtung scannen, um Objekte (28) auf der unteren Abstellfläche des Einkaufwagens zu erkennen.
Vorbestimmte erste Einheiten der besagten Photodetektoren (50, 52,101,103,108) sind angebracht, um in zwei Funktionseinheiten (40, 42) des Einkaufwagens (12) zu registrieren. ; einzige Funktion dieser Einheiten (40, 42) ist es, die oben erwähnten Photodetektoren (50, 52) anzusteuern, welche das Einfahren eines Einkaufwagens in den Kassengang, in dem die Detektoren installiert sind, anzeigen. Zumindest einer der besagten Photodetektoren (54, 56, 104, 105) ist so installiert um das Vorhandensein eines Objektes (28) in einem bestimmten Bereich (14) des Einkaufwagens (12) anzuzeigen. Charakterisiert sind beide Photodetektoreinheiten (50, 52, 54, 101, 103, 104, 105, 108) als diffuse Scan-Detektoren.
Besagte erste Einheit PD (50, 52, 54, 101, 103, 108) ist so angebracht, um in vorbestimmten Funktionseinheiten des Einkaufwagens (12) zu detektieren, wenn ein solcher von den ersten Photodetektoren (50, 52) geortet wird, während die zweite Einheit (54, 56) zwischen einem Paar der ersten Einheit (50, 52) in einer angepaßten Relation neben dem Durchgang (70) angebracht ist.

2. Dieses in Antrag 1 beschriebene System beinhaltet Signalisierungsvorrichtungen (30), welche an zumindest einen zweiten Detektor (54, 56) angeschlossen ist und angesteuert wird, sobald zumindest ein zweiter Detektor (54, 56) aktiviert wird und ein geortetes Objekt (28) in der gewählten Einheit (14) des Einkaufwagens (12), anzeigt.

3. Beim in Antrag 1 beschriebenem System beinhalten die Funktionsabschnitte (40, 42) des Einkaufwagens (12), ein Front- (40) und ein Hinterrad (42).

4. Beim in Antrag 1 beschriebenem System ist die Brennweite der ersten Photodetektoren (50, 52) auf eine Länge fokussiert, die kurzer als die Breite des Kassenausganges (70) ist.

5. Beim in Antrag 4 beschriebenem System haben die ersten Photodetektoren (50, 52) eine Brennweite von Kleiner/gleich die Hälfte der Breite des Kassenganges (70).

6. Im in Antrag 1 beschriebenem System produzieren die ersten Photodetoktoren (50, 52), bei nahezu gleichzeitiger Aktivierung ein Signal am Ausgang das die zweiten Photodetektoren (54, 56) ansteuert..

7. Das in Antrag 2 beschriebene System beinhaltet den Teilabschnitt (14) des Einkaufwagens (12) einen unteren Abschnitt, der für die Lagerung vorgesehen ist.

8. Das in Antrag 2 beschriebene System beinhaltet eine Videokamera (30) als Signalisierungsvorrichtungen (30); diese Kamera (30) ist mit dem zweiten Detektor (56) in Verbindung, um diese einzuschalten, wenn ein Objekt (28) geortet wird.

9. Beim in Antrag 2 beschriebenem System beinhalten besagte Signalisierungsvorrichtungen (30) zumindest eine Indikatorvorrichtung, welche zwischen einem Audioindikator (30) und einem visuellen Indikator (30) wählt.

10. Beim in Antrag 1 beschriebenem System wird zumindest einer der besagten zweiten Photodetektoren (54, 56, 104, 105) durch das gleichzeitige Einschalten der beiden ersten Photodetektoren ( 50, 52, 101, 103, 108), welche in einer angepaßten Relation zueinander angebracht sind, angesteuert.

11. Beim in Antrag 10 beschriebenem System, haben die ersten Photodetektoren (50, 52, 101, 103, 108) und die zweiten Photodetektoren jeweils eine einstellbare Brennweite, wobei alle Brennweiten auf weniger als die Breite des Kassenganges (70) beschränkt sind.

12. Beim in Antrag 11 beschriebenem System ist die Brennweite von zumindest den ersten Photodetektoren (50, 52, 101, 103, 108), auf circa weniger als die Hälfte der Breite des Kassenganges (70) fokussiert.

13. Das in Antrag 1 oder Antrag 12 beschriebene System beinhaltet logische Schaltungen wie 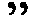 Flip-Flops" (109, 111), welche von besagtem ersten Photodetektor (108) angesteuert werden wenn ein Abschnitt des Einkaufwagens (12) vorbeigeführt wird, wobei diese logischen Schaltungen (109, 111) zumindest einen zweiten Photodetektor (54, 56, 104, 105) ansteuern.

14. Beim in Antrag 13 beschriebenem System sind besagte logische Schaltungen (109, 111) mit einer Vielzahl der ersten Photodetektoren verbunden (50, 52, 101, 103, 108) um die Ansteuerung von zumindest einem zweiten Photodetektor (56, 104, 105) zu gewährleisten, worauf die ersten Detektoren (50, 52, 101, 103, 108) durch das Vorbeifahren des Einkaufwagens (12) aktiviert werden.

15. Beim in Antrag 1 oder 14 beschriebenem System ist zumindest ein zweiter Photodetektor (54, 56, 104, 105) ein Infrarotdetektor.

16. Beim in Antrag 1 oder 14 beschriebenem System sind die Ausgänge der ersten Photodetektoren (50, 52, 101, 103, 108) an eine Sequenz angeschlossen, welche Kreise, die gegenläufig Strom führen (106, 107) aktiviert; dadurch werden - gemeinsam mit den Flip Flops (109, 111)- weitere Ortungsaktivitäten angesteuert wenn ein Einkaufswagen (12) sich in normaler Geschwindigkeit nähert.

17. Beim in Antrag 2 beschriebenem System haben die Signalisierungsvorrichtungen (30) optische Isolatoren (130, 132), welche zur Aktivierung an zumindest einen zweiten Detektor (54, 56, 104, 105) angeschlossen sind, um zu vermeiden, daß der Arbeitsvorgang weitergeht, bis ein(e) Kassier/In die optischen Isolatoren(130, 132) abdreht.

18. Beim in Antrag 1 beschriebenem System erfassen die ersten Photodetektoren zusammen mit einem Photoodetektor (108) einen dritten Funktionsabschnitt des Einkaufwagens und aktivieren anschließend die anderen ausgewählten, ersten Detektoren (101, 103).

19. Beim in Antrag 13 beschriebenem System sind bei den logischen Schaltungen eine geringfügige Verzögerung zwischen dem Ansprechen der ersten Photodetektoren vorgesehen.

## Revendications

1. Un système a être installé à côté de l'allée de sortie (70), laquelle a une largeur limité et une sortie de chariots (12), le système ayant une pluralité de photo détecteurs (50, 52, 54, 56, 101, 103, 108) qui scrutent substantiellement l'allée, en ligne horizontale et transversalement, pour détecter la présence d'un objet (28) situé au niveau le plus bas du chariot. Le système est caractérisé par le fait que quelques uns des premiers détecteurs, sélectionnés parmi les photo détecteurs (50, 52, 101, 103, 108) sont placés de façon à scruter deux sections fonctionnelles (40, 42) dudit chariot (12), étant lesdites deux sections (40, 42) capable d'activer uniquement lesdits premiers photo détecteurs (50, 52), pour détecter la présence d'un chariot dans l'allée adjacente aux détecteurs, et au moins un des deuxièmes photo détecteurs mentionnés (54, 56, 104, 105) étant placé pour détecter la présence d'un objet (28) sur la section sélectionnée (14) du chariot (12), les premiers et deuxièmes détecteurs mentionnés (50, 52, 54, 56, 101, 103, 104, 105, 108) étant des détecteurs scrutateurs diffus; lesdits premiers photo détecteurs (50, 52, 54, 101, 103, 108) étant placés pour détecter des sections fonctionnelles prédéterminés dudit chariot (12) lorsque un chariot est détecté par les premiers photo détecteurs mentionnés (50, 52); au moins un des deuxièmes photo détecteurs mentionnés (54, 56) étant placé, proportionnellement quant à l'espacement, entre une paire desdits premiers détecteurs (50, 52), à côté de ladite allée (70).

2. Le système, tel que décrit à la demande 1, inclut des moyens de signalisation (30) connectés avec au moins un desdits deuxièmes détecteurs (54, 56) et alimentés par ceux-ci par l'activation d'au moins un desdits deuxièmes détecteurs (54, 56), pour signaler la détection dudit objet (28) dans ladite section sélectionnée (14) dudit chariot (12).

3. Le système, tel que décrit à la demande 1, dans lequel lesdites sections fonctionnelles (40, 42) dudit chariot (12) comprennent une roue frontale de chariot (40) et une roue arrière de chariot (42).

4. Le système, tel que décrit à la demande 1, dans lequel lesdits premiers détecteurs (50, 52) sont convergeant, ayant une distance focale moindre que la largeur de ladite allée (70).

5. Le système, tel que décrit à la demande 4, dans lequel lesdits premiers photo détecteurs (50, 52) ont une distance focale égale ou moindre que la moitié de la largeur de ladite allée (70).

6. Le système, tel que décrit à la demande 1, dans lequel lesdits premiers photo détecteurs (50, 52) quand activés substantiellement et simultanément, produisent un débit qui alimente au moins un desdits deuxième photo détecteurs (54, 56).

7. Le système, tel que décrit à la demande 2, dans lequel ladite section sélectionnée (14) dudit chariot (12) inclut une section de stockage inférieure.

8. Le système, tel que décrit à la demande 2, qui inclut une caméra vidéo (30) laquelle fait partie desdits moyens de signalisation (30), ladite caméra (30) étant connectée en une relation de déclenchement mutuel au dit deuxième détecteur (56), pour commencer l'opération à partir de la détection de la présence dudit objet (28).

9. Le système, tel que décrit à la demande 2, dans lequel lesdits moyens de signalisation (30) comprennent au moins un dispositif indicatif, sélectionné parmi un indicateur audio (30) et un indicateur visuel (30).

10. Le système, tel que décrit à la demande 1, dans lequel au moins un desdits deuxièmes photo détecteurs (54, 56, 104, 105) sont alimentés à partir du déclenchement substantiel et simultané de deux desdits premiers photo détecteurs (50, 52, 101, 103, 108) qui sont arrangés proportionnellement quant à l'espacement.

11. Le système, tel que décrit à la demande 10, dans lequel lesdits premiers photo détecteurs (50, 52, 101, 103, 108) et au moins un desdits deuxièmes photo détecteurs ont, chacun, une distance focale réglable, et dans lequel lesdites distances focales sont toutes restreintes à moins de la largeur de ladite allée (70).

12. Le système, tel que décrit à la demande 11, dans lequel au moins lesdits premiers photo détecteurs (50, 52, 101, 103, 108) ont leur distance focale limitée à moins d'à peut prêt la moitié de la largeur de ladite allée (70).

13. Le système, tel que décrit à la demande 1 ou à la demande 12, ayant des éléments logiques, y compris des bascules ("flip-flops") (109, 111) alimentés par un desdits premiers photo détecteurs (108) à partir du passage par lui d'une section dudit chariot (12), lesdits éléments logiques (109, 111) permettant l'alimentation d'au moins un desdits deuxièmes photo détecteurs (54, 56, 104, 105).

14. Le système, tel que décrit à la demande 13, les éléments logiques duquel (109, 111) sont connectés avec une pluralité desdits premiers photo détecteurs (50, 52, 101, 103, 108), pour fournir ladite alimentation d'au moins un desdits deuxièmes photo détecteurs (56, 104, 105) à partir de l'alimentation desdits premiers détecteurs (50, 52, 101, 103, 108) par la présence dudit chariot (12).

15. Le système, tel que décrit à la demande 1 ou à la demande 14, dans lequel au moins un desdits deuxièmes photo détecteurs (54, 56, 104, 105) est un détecteur infrarouge.

16. Le système, tel que décrit à la demande 1 ou à la demande 14, dans lequel les sorties de débits desdits premiers photo détecteurs (50, 52, 101, 103, 108) sont connectées a une séquence de circuits, qui conduisent le courant en sens inverse, par le biais d'inverseurs (106, 107) qui, en combinaison avec les bascules ("flip-flops") (109, 111) garantissent l'initiation de l'activité de détection seulement à partir de la détection de la présence dudit chariot (12), à partir de son approximation normale.

17. Le système, tel que décrit à la demande 2, lesdits moyens de signalisation duquel (30) ont des ophto isolateurs (130, 132) connectés à au moins un desdits deuxièmes détecteurs (54, 56, 104, 105) pour l'alimentation, à travers celui-ci, de façon à prévenir la continuation de la transaction jusqu'à ce que lesdits ophto isolateurs soient éteints par un caissier.

18. Le système, tel que décrit à la demande 1, lesdits premiers photo détecteurs duquel incluent un photo détecteur (108) pour scruter une troisième section fonctionnelle dudit chariot avec l'activation subséquente des autres premiers détecteurs sélectionnés (101, 103).

19. Le système, tel que décrit à la demande 13, les éléments logiques duquel permettent un délais bref et prédéterminé entre la réponse desdits premiers photo détecteurs.
